# EUROPÄISCHE PATENTSCHRIFT

(11) **EP 4 119 905 B1**
(45) Veröffentlichungstag und Bekanntmachung des Hinweises auf die Patenterteilung: **16.04.2025**
(21) Anmeldenummer: 21185104.3
(22) Anmeldetag: 12.07.2021
(51) Int. Cl.: G01F 1/36, G01F 7/00

(54) **VERFAHREN ZUM BESTIMMEN EINER DURCHFLUSSMENGE, DURCHFLUSSSENSOR UND MESSSYSTEM MIT EINEM DURCHFLUSSSENSOR**
METHOD FOR DETERMINING A FLOW RATE, FLOW RATE SENSOR AND MEASURING SYSTEM WITH A FLOW RATE SENSOR
PROCÉDÉ DE DÉTERMINATION D'UN DÉBIT, CAPTEUR DE DÉBIT ET SYSTÈME DE MESURE DOTÉ D'UN CAPTEUR DE DÉBIT

(43) Veröffentlichungstag der Anmeldung: 18.01.2023
(73) Patentinhaber: IMT Analytics AG, 9470 Buchs SG (CH)
(72) Erfinder: VAN DER STAAY, Matthias, 8758 Obstalden (CH); BINDER, Matthias, 9470 Buchs SG (CH)
(74) Vertreter: PPR AG

(56) Entgegenhaltungen:
- DE-A1- 102019 205 113
- US-A1- 2002 016 688
- US-A1- 2005 188 771
- US-A1- 2006 053 902
- US-A1- 2009 234 593
- US-A1- 2016 084 687
- US-A1- 2016 341 585
- US-A1- 2020 103 265
- SENTERA: "Mounting and operating instructions DPD DUAL DIFFERENTIAL PRESSURE TRANSMITTER WITH DISPLAY", 9 April 2020 (2020-04-09), pages 1 - 13, XP055869175, Retrieved from the Internet <URL:https://www.sentera.eu/en/documents/miweb-en/dpd-g-4k0-mounting-instruction-972456/?dpd-g-4k0-mounting-instruction-972456.pdf> [retrieved on 20211203]

## Beschreibung

Die Erfindung betrifft ein Verfahren zum Bestimmen einer Durchflussmenge eines Fluids durch einen Durchflusssensor mit einem Messkanal nach Anspruch 1, einen Durchflusssensor nach Anspruch 9, ein Messsystem mit einem Durchflusssensor nach Anspruch 13 sowie einen Differenzdrucksensor nach Anspruch 15.

Flussmessungen bzw. Durchflussmengenmessungen werden in verschiedensten Bereichen angewendet, unter anderem in Beatmungsgeräten, Inhalatoren, Sauerstoffkonzentratoren und Anästhesiegeräten. Es gibt verschiedenste Messansätze: Druck-basiert, thermische Messung, Ultraschall-Ansätze oder auch variable-Flächen Flussmessungen.

Die meisten Druck-basierten Ansätze nutzen den Zusammenhang von Druck und Durchflussmenge. Bei einem Venturi-Meter wird der Flusskanal verkleinert, was die Strömungsgeschwindigkeit im Kanal verändert. Dies wiederum erzeugt einen Druckunterschied zwischen dem schnellen und langsamen Durchflussbereich. Der resultierende Differenzdruck zwischen dem schnellen und langsamen Durchflussbereich ist nun flussabhängig. Somit kann aus dem gemessen Differenzdruck der Fluss hergeleitet werden. Ein alternativer Ansatz ist das Einfügen eines Widerstandes in den Flusskanal. Dabei fällt ein gewisser Anteil vom Druck über dem Widerstand ab. Somit gibt es einen Druckunterschied vor und nach dem Widerstand der wiederum flussabhängig ist. Dieser Differenzdruck wird gemessen um auf den Fluss schliessen zu können.- Es gibt diverse Arten, wie ein derartiger Widerstand konstruiert sein kann. Beispielsweise kann eine Blende als Widerstand verwendet werden. Weitere Flussmessungen gebrauchen Siebe, Honeycomb-Elemente oder linear Flow Elemente als Widerstand.

Jeder Widerstand bzw. jeder Differenzdruck setzt sich aus zwei Teilen zusammen, einem laminaren Teil und einem turbulenten Teil. Der laminare Teil hat einen linearen Zusammenhang zwischen dem Durchfluss und dem Differenzdruck im Messkanal, während der turbulente Teil einen quadratischen Zusammenhang zwischen dem Durchfluss und dem Differenzdruck aufweist.

Die US6681189 A offenbart ein computergestütztes Verfahren zum Bestimmen einer Durchflussrate eines Fluids, das durch eine Leitung mit einem Obstruktionsdurchflussmesser fliesst, umfassend: Empfangen eines Beta-Verhältniswertes, der ein Beta-Verhältnis des Obstruktionsdurchflussmessers anzeigt; Empfangen eines Druckdifferenzwertes, der eine Druckdifferenz über den Obstruktionsdurchflussmesser anzeigt; Empfangen eines Dichtewertes, der eine Dichte des Fluids anzeigt; Empfangen einer Abflusskoeffizientenformel für den Obstruktionsdurchflussmesser, wobei die Abflusskoeffizientenformel eine Funktion des Beta-Verhältnisses des Obstruktionsdurchflussmessers und einer Eulerschen Zahl für das durch die Leitung fliessende Fluid ist; und Bestimmen der Durchflussrate durch den Computer auf der Grundlage des empfangenen Beta-Verhältniswertes, des empfangenen Druckdifferenzwertes, des empfangenen Dichtewertes und der empfangenen Abflusskoeffizientenformel.

Die CN212340332 U offenbart ein Verfahren zur Verringerung der Interferenz von Hochpräzisions-Durchflussmessern. Die Messvorrichtung umfasst ein Messrohr mit mehreren, in Serie angeordneten Druck-Ringen zwischen denen zwei Differenzdruck-Sensoren angeordnet sind, wobei mithilfe der Differenzdruck-Sensoren zwei zueinander benachbarten Drücke zwischen den benachbarten Druck-Ringen misst.

US2002/016688A1 offenbart ein Verfahren zur genauen Berechnung der Gas- und Flüssigkeitsmassenströme in einem verlängerten Venturirohr, dass die Verwendung von vier durch Tests ermittelten Werten umfasst: ΔP3, dass die gemessene Druckdifferenz über der Venturiverengung ist; ΔP2, dass die gemessene Druckdifferenz über dem verlängerten Venturirohrhals ist; P, dass der absolute Druck stromaufwärts des Venturirohrs ist, und T, dass die Temperatur des Stroms stromaufwärts ist.

US2016341585A1 offenbart einen Mehrphasen-Durchflussmesser, der zwei Widerstandselemente in Reihe umfasst und bei dem drei Differenzdrücke gemessen werden: dp1 und dp2 werden über jedes Widerstandselement gemessen, während dp3 über beide Widerstandselemente gemessen wird.

Nachteilig an diesen bekannten Lösungen ist, dass nur ein eingeschränkter Flussmessbereich erfassbar ist, welcher auch als Turndown Verhältnis bekannt ist. Das Turndown Verhältnis berechnet sich durch die maximal messbare Durchflussmenge dividiert durch die minimal messbare Durchflussmenge und charakterisiert somit die Bereichsfähigkeit einer Durchflussmessung.

Aufgabe der vorliegenden Erfindung ist es somit, ein Verfahren zu schaffen, welches zumindest einen der vorgenannten Nachteile nicht aufweist und insbesondere ein verbessertes Verfahren, einen verbesserten Durchflusssensor bzw. verbessertes Messsystem bereit zu stellen, mit dem eine Auswertung der Durchflussmenge über eine höheren Flussmessbereich mit einer verbesserten absoluten Auflösung und Messgenauigkeit ermöglicht ist. Des Weiteren soll ein Differenzdrucksensor geschaffen werden, mit dem gleichzeitig mehrere Differenzdruckbereiche mit verbesserter Auflösung messbar sind.

Die Aufgabe wird durch die Merkmale der unabhängigen Ansprüche gelöst. Vorteilhafte Weiterbildungen sind in den Figuren und in den abhängigen Patentansprüchen dargelegt.

Gemäss dem erfindungsgemässen Verfahren zum Bestimmen einer Durchflussmenge eines Fluids durch einen Durchflusssensor mit einem Messkanal, umfasst das Verfahren zumindest die folgenden Schritte:
a. Bereitstellen eines Fluids im Messkanal des Durchflusssensors, wobei drei Widerstandselemente (20a-20c) im Messkanal (19) vorhanden sind;
b. Erfassen zumindest eines ersten Differenzdrucks im Messkanal, wobei der zumindest eine erste Differenzdruck in einem ersten Differenzdruckbereich im Messkanal vorliegt, und wobei der erste Differenzdruck über das zweite Widerstandselement (20b) erfasst wird, oder über das zweite und dritte Widerstandselement (20b, 20c) erfasst wird;
c. Erfassen zumindest eines zweiten Differenzdrucks im Messkanal, wobei der zumindest eine zweite Differenzdruck in einem zweiten Differenzdruckbereich im Messkanal vorliegt und der Differenzdruck im zweiten Differenzdruckbereich den Differenzdruck im ersten Differenzdruckbereich umfasst;
d. Übermitteln der erfassten Differenzdrücke an eine Auswerteeinheit;
e. Bestimmten einer Durchflussmenge im Messkanal mithilfe der Auswerteeinheit auf Basis der erfassten Differenzdrücke.

Als Fluid ist typischerweise ein Gas oder eine Flüssigkeit verwendbar. Insbesondere ist der Durchflusssensor für die Prüfung der Durchflussmenge des Beatmungsgases (als Fluid) durch ein Beatmungsgerät verwendbar. Ein Differenzdruck im Messkanal wird mithilfe zumindest eines Widerstandselements im Messkanal erzeugt, da aufgrund des Widerstandselements ein erster Druck auf einer ersten Seite des Widerstandselements im Messkanal vorhanden ist und ein zweiter Druck auf einer zweiten Seite des Widerstandselements vorhanden ist. Ein Differenzdruck entsteht, wenn man die beiden Drücke erfasst und die erfassten Drücke voneinander subtrahiert bzw. den Differenzdruck direkt erfasst. Alternativ dazu fliesst eine kleine Menge des Fluids durch einen am Messkanal angeordneten Differenzdrucksensor, wobei der Differenzdrucksensor den Differenzdruck direkt erfasst.

Der erste Differenzdruck ist unterschiedlich zum zweiten Differenzdruck, wobei der erste Differenzdruck insbesondere kleiner ist, als der zweite Differenzdruck. Die Kombination von zwei unterschiedlichen Messbereichen, welche sich zumindest überlappen, mit unterschiedlichen Differenzdrücken im Messkanal des Durchflusssensors erhöht die Auflösung und die Genauigkeit über den gesamten für die Messung relevanten Messbereich und verbessert das Bestimmen der Durchflussmenge im Messkanal und erhöht das Turndown Verhältnis. Als Auflösung ist hier die Änderung des Druckunterschieds pro Änderung des Flusses im Messkanal definiert.

Typischerweise ist es gewünscht, dass die Auflösung und Genauigkeit im gesamten Messbereich im Messkanal genügend gross ist. Dafür sind zwei Bedingungen relevant; Erstens soll der Differenzdruck beim maximalen Durchfluss des Fluids gross genug gewählt werden, und zweites soll der laminare Teil der Messung möglichst gross sein. Dies hat zur Folge, dass die Auflösung und der Differenzdruck bei kleinen Durchflussmengen im Messkanal grösser sind. Im Allgemeinen wirken beide Bedingungen bzw. Effekte gegeneinander. Wenn der Differenzdruck vergrössert wird, wird in erster Linie nur der quadratische Anteil des Differenzdrucks vergrössert, was das Verhältnis von laminarem Teil zu turbulentem Teil in der Messung wieder verschlechtert. Wenn man nun versucht, den Durchfluss laminarer zu halten, wird der Gesamt-Differenzdruck verkleinert.

Ein weiterer Effekt des quadratischen Anteils der Messung ist, dass die Auflösung der berechneten Durchflussmenge bei hohen Durchflussmengen viel grösser ist als bei tiefen Durchflussmengen. Normalerweise wünscht man sich bei tiefen Durchflussmengen eine grössere absolute Auflösung oder zumindest eine gleich grosse absolute Auflösung wie bei hohen Durchflussmengen.

Anstelle von einem Widerstand beinhaltet der Messkanal zumindest zwei Widerstände. Die Differenzdrücke über die Widerstände werden linear addiert, und der laminare Anteil wird proportional zu der Anzahl der Widerstände erhöht. Die tiefen Durchflussmengen werden über einen Differenzdruck, insbesondere über die Summe aller Differenzdrücke gemessen und die hohen Durchflussmengen nur über einzelne Differenzdrücke, welche beispielsweise geringer sind. Es entstehen somit mehrere Druckbereiche, die einzeln gemessen werden können. Es kann frei gewählt werden, welchen Durchflussmengenbereich über wie viele Differenzdruckbereiche gemessen werden.

Die absolute Auflösung ist aufgrund des zuvor genannten Verfahrens über den ganzen Messbereich besser verteilt. Zum einen erhält man eine hohe Auflösung und Genauigkeit bei tiefen Durchflussmengen, da der laminare Anteil gross ist, zum anderen erhält man auch eine ähnliche Auflösung bei hohen Durchflussmengen, da über weniger Differenzdruckbereiche gemessen wird. Im Allgemeinen kann mit den zuvor genannten Verfahren nun eine beliebige Auflösung und unterschiedliche Turndown Verhältnisse hergestellt werden, je nach Anforderungen.

Die Durchflussrichtung des Fluids durch den Messkanal ist nicht relevant, sodass das zuvor genannte Verfahren für bidirektionale Messungen einsetzbar ist. Das heisst, es ist belanglos von welcher Richtung das Fluid durch den Messkanal strömt, das Prinzip funktioniert genau gleich. Zusätzlich zeigt dieses Messverfahren keine Hysterese-Effekte in der Messung.

Der zweite Differenzdruckbereich schliesst den ersten Differenzdruckbereich im Messkanal ein, sodass die innere Messung des ersten Differenzdrucks durch die äussere Messung des zweiten Differenzdrucks vor externen Turbulenzen geschützt ist, welche insbesondere bei hohen Durchflussmengen entstehen. Ausserdem wir dadurch der total Differenzdruck so klein wie möglich gehalten.

Vorzugsweise erfolgt das Erfassen des ersten Differenzdrucks und des zweiten Differenzdrucks gleichzeitig. Dabei wird der Druck an vier Bereichen im Messkanal gemessen und der erste Differenzdruck und der zweite Differenzdruck bestimmt. Damit ist ein schnelles und vereinfachtes Erfassen und Auswerten der Daten der beiden Differenzdrücke ermöglicht.

Bevorzugterweise umfasst der erste Differenzdruckbereich im Messkanal zumindest ein Widerstandselement, wobei Differenzdrücke im Differenzdruckbereich von -20kPa bis 20kPa vorhanden ist. Damit sind hohe Durchflussmengen im Messkanal einfach bestimmbar bzw. messbar.

Insbesondere werden Differenzdrücke im Differenzdruckbereich von -1.2kPa bis 1.2kPa, bevorzugt von -0.5kPa bis 0.5kPa vorhanden ist. Dabei können Differenzdrucksensoren bereitgestellt werden, die in diesem Bereich messen, deren Aufbau standardisiert ist und die dadurch kostengünstig herstellbar sind.

Vorzugsweise umfasst der zweite Differenzdruckbereich im Messkanal zumindest zwei Widerstandselemente, wobei Differenzdrücke im Differenzdruckbereich von -100kPa bis 100kPa vorhanden ist. Damit sind kleinere Durchflussmengen im Messkanal mit der notwendigen Auflösung einfach bestimmbar.

Insbesondere werden Differenzdrücke im Differenzdruckbereich von -5kPa bis 5kPa, bevorzugt von -1.5kPa bis 1.5kPa vorhanden ist. Dabei können mehrere Widerstandselemente im Messkanal bereitgestellt werden, deren Aufbau gleich ist und die dadurch kostengünstig herstellbar sind.

Je mehr Widerstandselemente in Serie im Messkanal angeordnet werden, umso mehr Freiheiten für die Skalierung der Messung ist gegeben. Der Druck in den Druckdifferenzbereichen im Messkanal ist durch die Anzahl der Widerstandselemente bestimmt. Zusätzlich kann der Differenzdruck bzw. der Druckabfall über ein Widerstandselement kleiner gehalten sein, wenn mehrere Widerstandselemente im Messkanal vorhanden sind. Bei einem Widerstandselement mit kleinem Differenzdruck bzw. Druckabfall ist der laminare Anteil im Allgemeinen grösser, wodurch der gesamte Widerstand wiederum verbessert ist. Das erste Widerstandselement, wie hier vorliegend definiert, ist jenes Widerstandselement, welches je nach Strömungsrichtung des Fluids als erstes vom Fluid erfasst wird. Das zweite Widerstandselement im Messkanal wird folglich zu einem späteren Zeitpunkt vom Fluid erfasst. Als Widerstandselement kann eine Scheibe, mit einer Anzahl von definierten Löchern, ggf. unterschiedlichen Grösse, in der Scheibe, sein.

Insbesondere wird der erste oder der zweite Differenzdruck über zumindest das letzte Widerstandselement erfasst, sodass Erfassen des Differenzdrucks strömungsunabhängig ist. Der laminare Teil des Durchflusses erhöht sich, je mehr Widerstandeselemente im Messkanal in Serie angeordnet sind. Der Durchfluss wird deshalb über dem letzten Widerstandselement den grössten laminaren Anteil haben. Dies verbessert die Widerstandscharakteristik vom letzten Widerstandselement gegenüber dem zweiten Widerstandselement. Eine verbesserte Widerstandscharakteristik führt zu einer weiteren Verbesserung der Auflösung.

Insbesondere ist zumindest ein Widerstandselement unterschiedliche zu einem weiteren Widerstandselement aufgebaut. Die genauen Differenzdruckbereiche können einzeln ausgelegt werden, wobei der maximale Differenzdruck und die Auflösung in jedem Differenzdruckbereich einzeln angepasst wird.

Gemäß der Erfindung wird der erste Differenzdruck im Messkanal über das zweite Widerstandselement erfasst oder über das zweite und das dritte Widerstandselement erfasst. Damit ist die Messung des ersten Differenzdruck, also der inneren Messung, durch die äusseren Widerstandselemente geschützt, sodass Turbulenzen, insbesondere bei hohen Durchflussmengen verhinderbar sind und damit die Genauigkeit im Messverfahren weiter verbessert ist.

Insbesondere wird der zweite Differenzdruck im Messkanal über alle drei Widerstandselemente erfasst

Vorzugsweise ist eine Speichereinheit vorhanden, in welcher zumindest ein erster Schrankenwert für den ersten Differenzdruck gespeichert wird. Der zumindest eine erste Schrankenwert dient als Festlegungskriterium für das Erfassen des zweiten Differenzdrucks im zweiten Differenzdruckbereich. Wird der zumindest erste Schrankenwert für den ersten Differenzdruck erreicht, so kann automatisch festgelegt werden, ob bzw. wie der zweite Differenzdruck gemessen wird. Ein einfaches Umschalten der Messungen zwischen den ersten und zweiten Differenzdrücken ist je nach Höhe der Durchflussmenge möglich.

Alternativ oder ergänzend wird zumindest ein erster Schrankenwert für den zweiten Differenzdruck in der Speichereinheit gespeichert. Der zumindest eine erste Schrankenwert dient als Festlegungskriterium für das Erfassen des zweiten Differenzdrucks im zweiten Differenzdruckbereich. Wird der zumindest erste Schrankenwert für den zweiten Differenzdruck erreicht, so kann abhängig von der Durchflussmenge ein Umschalten zwischen den Messungen erfolgen.

Bevorzugterweise wird aus der Speichereinheit zumindest ein Schrankenwert abgerufen und in der Auswerteeinheit mit zumindest einem der beiden erfassten Differenzdrücke verglichen. Die Auswerteeinheit kann selbstständig erkennen, bei welcher Durchflussmenge ein Umschalten der Messbereiche notwendig ist.

Bevorzugt wird der erste Schrankenwert des ersten Differenzdrucks mit dem aktuell erfassten ersten Differenzdruck verglichen. Das Messverfahren kann verkürzt werden, wenn die gewünschte Auflösung bei der vorliegenden Durchflussmenge bereits ausreichend ist. Insbesondere wird der Schritt c. ausgeführt, wenn der erste Schrankenwert grösser ist, als der aktuell erfasste erste Differenzdruck.

Vorzugsweise ist zumindest ein Differenzdrucksensor vorhanden, wobei der zumindest eine Differenzdrucksensor den ersten Differenzdruck und den zweiten Differenzdruck misst und der Messbereich des zumindest einen Differenzdrucksensors für den zweiten Differenzdruck kleiner ist, als der Messbereich des zumindest einen Differenzdrucksensors für den ersten Differenzdruck.

Alternativ ist ein zweiter Differenzdrucksensor vorhanden, wobei der zumindest eine Differenzdrucksensor (innere) den ersten Differenzdruck im ersten Differenzdruckbereich misst und der zweite Differenzdrucksensor (äussere) den zweiten Differenzdruck im zweiten Differenzdruckbereich misst, wobei der Messbereich für den ersten Differenzdrucksensor grösser ist, als der Messbereich des zweiten Differenzdrucksensors (äussere). Dies erhöht zusätzlich die Auflösung und somit die Genauigkeit bei kleinen Durchflussmengen.

Bevorzugt ist der Messbereich des zumindest einen Differenzdrucksensors (innere) im Bereich von -20kPa bis 20kPa, insbesondere -1.2kPa bis 1.2kPa, bevorzugt von -0.5kPa bis 0.5kPa.

Bevorzugt ist der Messbereich des zweiten Differenzdrucksensors (äussere) im Bereich von -2.5kPa bis 2.5kPa, insbesondere -0,5kPa bis 0.5kPa, bevorzugt von -0.125kPa bis 0.125kPa.

Bevorzugterweise wird zumindest eine Fluideigenschaft des Fluids im Messkanal erfasst, und im Schritt e) zum Bestimmten der Durchflussmenge in der Auswerteeinheit verwendet. Damit wird das Bestimmen der Durchflussmenge mit der gewünschten Genauigkeit weiter verbessert, da diese nicht nur von der Geometrie im Messkanal abhängt, sondern auch von den Fluideigenschaften selbst.

Insbesondere wird die Fluideigenschaft mithilfe von einem Benutzer erfasst und/oder mit einem Sensor gemessen und/oder in der Auswerteeinheit berechnet. Damit kann das Verfahren zusätzlich mit Erfahrungswerten, bspw. für einen gewissen Fluidtyp weiter verbessert werden. Beispielsweise werden die Fluideigenschaften als Parameter in eine Lookup Tabelle in der Auswerteeinheit hinterlegt und können so in Abhängigkeit der Benutzer Eingaben oder in Abhängigkeit die vom Sensor gemessenen (anderen) Fluideigenschaften einfach berechnet werden. Somit stehen dem im Verfahren die Fluideigenschaften unmittelbar zur Verfügung, sodass ein schnelles und kostengünstiges Messverfahren ausführbar ist.

Bevorzugt wird die Fluideigenschaft zumindest von einem Parameter aus der Gruppe des Absolutdrucks, der Temperatur, der Feuchte, des Fluidtypes, der Viskosität oder der Dichte umfasst. Diese können einzeln, oder in Kombination, direkt zum Bestimmen der Durchflussmenge verwendet werden, sodass die Genauigkeit im Messverfahren erhöht ist und insbesondere das Umrechnen in unterschiedliche Durchflussmengen-Mess-Standards erfolgen kann. Die Parameter der Fluideigenschaften sind über zumindest eine mathematische Funktion, beispielsweise einem Polynom, abgebildet und können bei Bestimmen der Durchflussmenge berücksichtigt werden.

Ein erfindungsgemässer Durchflusssensor zum Bestimmen einer Durchflussmenge eines Fluids in einem Messkanal, insbesondere mit einem zuvor angeführten Verfahren, umfasst einen Messkanal mit zumindest vier Kanalabschnitten, welche in Serie benachbart zueinander im Durchflusssensor angeordnet sind und zwischen den zueinander benachbarten Kanalabschnitten jeweils zumindest ein Widerstandselement angeordnet ist, wobei jeder der vier Kanalabschnitte zumindest einen Messanschluss zum Messen eines Fluiddrucks aufweist.

Zumindest zwei Kanalabschnitte definieren den ersten Differenzdruckbereich und zumindest drei Kanalabschnitte definieren den zweiten Differenzdruckbereich. Jeder Differenzdruck im Messkanal wird mithilfe zumindest einem Widerstandselement im Messkanal erzeugt, wie zuvor beschrieben. Der erste Differenzdruck ist unterschiedlich zum zweiten Differenzdruck, wobei der erste Differenzdruck insbesondere kleiner ist, als der zweite Differenzdruck. Die Kombination von zwei unterschiedlichen Messbereichen mit unterschiedlichen Differenzdrücken im Messkanal des Durchflusssensors erhöht die Auflösung über den gesamten für die Messung relevanten Messbereich und verbessert das Bestimmen der Durchflussmenge im Messkanal. Ein optimales Widerstandselement weist einen möglichst grossen laminaren Widerstandsanteil auf. Dies ist gewünscht, damit die absolute Auflösung bei kleinen Durchflussmengen möglichst gross ist.

Die absolute Auflösung bei der Messung ist aufgrund der zuvor genannten Geometrie des Durchflusssensors über den ganzen Messbereich besser verteilt. Zum einen erhält man eine hohe Auflösung bei tiefen Durchflussmengen, da der laminare Anteil gross ist, zum anderen erhält man auch eine ähnliche Auflösung bei hohen Durchflussmengen, da über weniger Differenzdruckbereiche gemessen wird. Im Allgemeinen kann mit dem hier offenbarten Durchflusssensor und dem zuvor genannten Verfahren nun eine beliebige Auflösung beim Bestimmen der Durchflussmenge eingestellt werden, je nach Anforderungen. Darüber hinaus weist der Durchflusssensor keine beweglichen Bauteile auf, sodass dieser robust und langlebig ist sowie miniaturisierbar ist.

Das Anordnen der Widerstandselemente in Serie führt zu einer vorteilhaften Addition der Widerstandswerte, wobei das Verhältnis von linearem zu quadratischem Anteil gleich bleibt. Das heisst, der Widerstand behält das gewünschte Verhältnis und der Gesamtwiderstand wird grösser.

Vorzugsweise ist zumindest ein Gehäusebauteil vorhanden, in welchem die drei Kanalabschnitte ausgebildet sind. Das Gehäusebauteil lässt sich einfach mit additiven Herstellungsverfahren herstellen und umfasst sowohl die zumindest drei Kanalabschnitte sowie die darin, gegebenenfalls fix, verbauten Widerstandselemente. Damit ist der Durchflusssensor einfach und kostengünstig, herstellbar. Darüber hinaus weisen die hergestellten Durchflusssensoren eine vergleichbare Charakteristik auf, sodass auf eine nachträgliche Anpassung der Geometrie verzichtet werden kann.

Bevorzugt ist im ersten Kanalabschnitt ein Sieb angeordnet, sodass die Messung der Durchflussmenge nicht von unerwünschten Fremdkörpern oder vorangehende Turbulenzen gestört ist. Insbesondere ist am letzten Kanalabschnitt ebenfalls ein weiteres Sieb angeordnet. Damit ist der Messkanal bidirektional geschützt.

Vorzugsweise sind zumindest zwei Gehäusebauteile vorhanden, in welchen zumindest jeweils einer der drei Kanalabschnitte ausgebildet ist. Dadurch ist ein einfaches Gehäuse mit wenigen Bauteilen mit definierten Differenzdruckbereichen vorhanden, wobei ein reproduzierbares Erfassen des ersten und des zweiten Differenzdrucks möglich ist.

Bevorzugterweise sind die Widerstandselemente austauschbar in Messkanal angeordnet. Damit lässt sich das Gehäuse, beispielsweise einfach herstellen und je nach Anwendung des Durchflusssensors können unterschiedliche Widerstandselemente im Messkanal einfach angeordnet werden, um beispielsweise die Auflösung im Messverfahren dem Fluidtyp anzupassen. Insbesondere können defekte Widerstandselemente einfach ausgetauscht werden, wodurch der Durchflusssensor für unterschiedliche Anwendungen verwendbar ist, sodass die Umwelt geschont wird.

Bevorzugt ist zumindest ein Widerstandselement unterschiedlich zu einem anderen Widerstandselementen ausgebildet. Damit ist der laminare bzw. der turbulente Teil, je nach verwendeten Fluidtyp, anpassbar.

Vorzugsweise ist zumindest ein Differenzdrucksensor an zumindest zwei der Messanschlüsse angeordnet. Die Messanschlüsse können dabei von dem Druckmesssensor abragen, oder als Stichleitung in den Messkanal verlaufen, sodass sich der Differenzdrucksensor ebenfalls im Messkanal befindet und/oder ausserhalb des Messkanals angeordnet ist. Der Differenzdrucksensor kann zum Erfassen des ersten Differenzdrucks sowie zum Erfassen des zweiten Differenzdrucks zumindest vier Druckmessanschlüsse auf, welche direkt oder indirekt mit den Messanschlüssen verbunden sind. Insbesondere ist ein weiterer Differenzdrucksensor vorhanden, wobei der zumindest eine Differenzdrucksensor mit zwei Messanschlüsse des Durchflusssensors direkt oder indirekt verbunden ist und der weitere Differenzdrucksensor mit zwei weiteren Messanschlüssen des Durchflusssensors verbunden ist.

Bevorzugt ist zumindest ein Absolutdrucksensor und/oder ein Temperatursensor und/oder ein Feuchtigkeitssensor im Messkanal vorhanden. Damit sind weitere Fluideigenschaften messbar und die Genauigkeit beim Bestimmen der Durchflussmenge verbesserbar sowie das Umrechnen in unterschiedliche Durchflussmengen-Mess-Standards möglich.

Ein erfindungsgemässes Messsystem zum Bestimmen einer Durchflussmenge mit einem Durchflusssensor, insbesondere mit einem wie zuvor beschriebenen Durchflusssensor und mit zumindest einem Differenzdrucksensor umfasst eine Auswerteeinheit, welche zumindest mit dem zumindest einen Differenzdrucksensor verbunden ist, um zumindest einen ersten Differenzdruck im Messkanal des Durchflusssensors zu erfassen und einen zweiten Differenzdruck im Messkanal des Durchflusssensors zu erfassen. Der Differenzdrucksensor ist somit zwischen den Messanschlüssen des Durchflusssensors und der Auswerteeinheit angeordnet, wobei dies zumindest aus elektrotechnischer Sicht zu sehen ist - insbesondere, wenn der Differenzdrucksensor im Messkanal des Durchflusssensors angeordnet ist. Insbesondere ist die Auswerteinheit ausgebildet, das zuvor genannte Verfahren auszuführen. Die absolute Auflösung ist aufgrund des zuvor genannten Verfahrens über den ganzen Messbereich besser verteilt. Zum einen erhält man eine hohe Auflösung und Genauigkeit bei tiefen Durchflussmengen, da der laminare Anteil gross ist, zum anderen erhält man auch eine ähnliche Auflösung bei hohen Durchflussmengen, da über weniger Differenzdruckbereiche gemessen wird. Im Allgemeinen kann mit dem zuvor genannten Messsystem nun eine beliebige Auflösung hergestellt werden, je nach Anforderungen.

Vorzugsweise ist eine Anzeigeeinheit vorhanden, um zumindest die Durchflussmenge anzuzeigen, sodass ein direktes Ablesen der gemessenen Durchflussmenge und/oder der weiteren zuvor genannten Fluideigenschaften am Messsystem ermöglicht ist.

Insbesondere ist die Durchflussmenge grafisch darstellbar, sodass beispielsweise der zeitliche Verlauf der Durchflussmenge darstellbar ist.

Bevorzugterweise ist eine Speichereinheit vorhanden, in welcher zumindest ein erster Schrankenwert gespeichert ist. Damit ist der zuvor beschriebene zumindest erste Schrankenwert einfach und reproduzierbar abrufbar und in der Auswerteeinheit verwendbar.

Alternativ oder ergänzend ist zumindest eine Schnittstelle zum Auslesen von erfassten Werten der Differenzdrücke oder Durchflussmengen vorhanden. Die erfassten Werte sind somit an ein externes Auswertegerät übertragbar. Die Schnittstelle kann eine drahtlose oder eine drahtbehaftete Schnittstelle sein, sodass gegebenenfalls auf eine physische Verbindung des Messsystems mit dem externen Auswertegerät verzichtet werden kann. Alternativ oder ergänzend ist eine Schnittstelle zum Auslesen von ausgewerteten Daten vorhanden.

Ein erfindungsgemässer Differenzdrucksensor für einen Durchflusssensor, insbesondere einen wie zuvor beschriebener Durchflusssensor, umfasst vier Druckmessanschlüsse zum Erfassen von zwei unterschiedlichen Differenzdrücken in einem Messkanal. Ein derartiger Differenzdrucksensor benötigt nur eine Stromversorgung, nur ein Gehäuse und ist somit einfach und kostengünstig aufgebaut. Das dafür notwendige Ausleseprotokoll kann einfach gehalten werden und es ist nur eine Schnittstelle, beispielsweise ein Datenbus notwendig, sodass die Installation und die Wartung des Differenzdrucksensor vereinfacht ist.

Bevorzugt ist der Messbereich (innere) im Bereich von -20kPa bis 20kPa, insbesondere -1.2kPa bis 1.2kPa, bevorzugt von -0.5kPa bis 0.5kPa.

Bevorzugt ist der Messbereich (äussere) im Bereich von -2.5kPa bis 2.5kPa, insbesondere -0,5kPa bis 0.5kPa, bevorzugt von -0.125kPa bis 0.125kPa.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: einen erfindungsgemässen Durchflusssensor in einer schematischen Schnittansicht,
- Fig. 2: ein erfindungsgemässes Messsystem mit einem Durchflusssensor gemäss Fig. 1 in einer schematischen Seitenansicht,
- Fig. 3: das Messsystem gemäss Fig. 2 in einer weiteren schematischen Seitenansicht,
- Fig. 4: ein Flussdiagramm zu einem erfindungsgemässen Verfahren mit einem mit einem Messsystem gemäss Fig. 2 oder Fig. 3, und
- Fig. 5: einen erfindungsgemässen Differenzdrucksensor für einen Durchflusssensor gemäss Fig. 1.

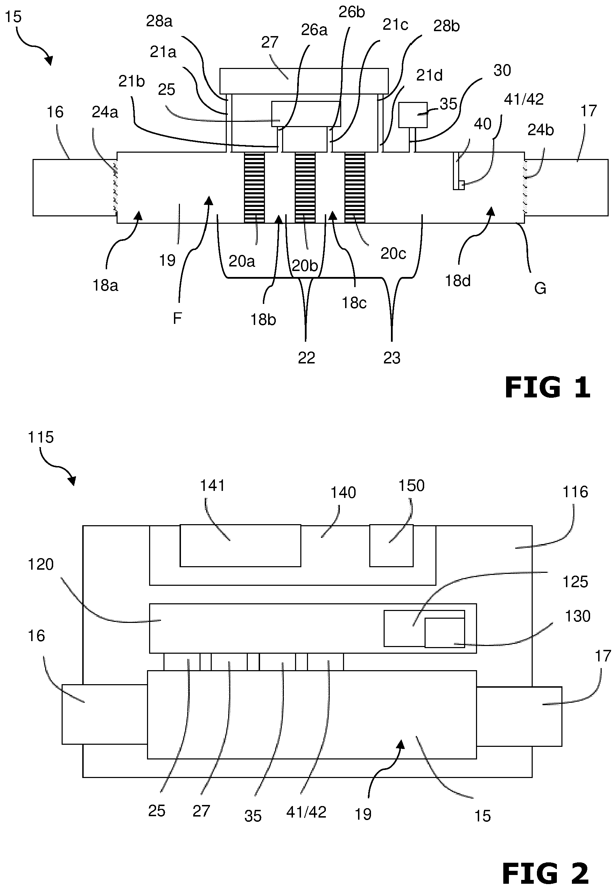

Fig. 1 zeigt einen Durchflusssensor 15 mit einem Gehäusebauteil G zum Bestimmen einer Durchflussmenge eines Fluids F in einem Messkanal 19. Der Durchflusssensor 15 weist einen ersten Anschluss 16 und einen zweiten Anschluss 17 zum Anschliessen von Fluidschläuchen auf, wobei sich der Messkanal 19 zwischen dem ersten und dem zweiten Anschluss 16, 17 erstreckt. An den beiden Anschlüssen 16, 17 sind Siebe 24a, 24b angeordnet, um den Messkanal vor Fremdkörpern zu schützen und die Strömung des Fluids zu beruhigen, sodass eine reproduzierbare Messung ermöglicht ist. Der Messkanal 19 weist vier Kanalabschnitte 18a-18d auf, welche in Serie benachbart zueinander im Durchflusssensor 15 angeordnet sind und zwischen den zueinander benachbarten Kanalabschnitten 18a-18d jeweils zumindest ein Widerstandselement 20a-20c in Serie zueinander angeordnet sind. Der Durchflusssensor 15 weist einen ersten Differenzdruckbereich 22 und einen zweiten Differenzdruckbereich 23 auf. Der erste Differenzdruckbereich 22 kann auch als innerer Differenzdruckbereich bezeichnet werden und umfasst die zwei Kanalabschnitte 18b und 18c, sowie das Widerstandselement 20b. Der zweite Differenzdruckbereich 23 kann auch als äusserer Differenzdruckbereich bezeichnet werden und umfasst die vier Kanalabschnitte 18a-18d, sowie die Widerstandselemente 20a-20c. Jeder der Kanalabschnitt 18a-18d weist einen Messanschluss 21a-21d zum Messen eines Fluiddrucks des durch den Messkanal strömenden Fluids F auf.

Es ist ein erster Differenzdrucksensor 25 an den Messanschlüssen 21b und 21c angeordnet. Die Messanschlüsse 21b und 21c ragen von dem Durchflusssensor 15 ab. Der Differenzdrucksensor 25 weist zwei Druckmessanschlüsse 26a und 26b auf und erfasst den ersten Differenzdruck im ersten Differenzdruckbereich 22. Der Messbereich des ersten Differenzdrucksensors 25 ist im Bereich von -0.5kPa bis 0.5kPa.

Es ist ein zweiter Differenzdrucksensor 27 an den Messanschlüssen 21a und 21d am Durchflusssensor 15 angeordnet. Der Messbereich des zweiten Differenzdrucksensors 27 ist im Bereich von -0.125kPa bis 0.125kPa. Die Messanschlüsse 21a und 21d ragen von dem Durchflusssensor 15 ab. Der Differenzdrucksensor 27 weist zwei Druckmessanschlüsse 28a und 28b auf und erfasst den zweiten Differenzdruck im zweiten Differenzdruckbereich 23.

Der erste Differenzdruck wird über die Messanschlüsse 21b und 21c gemessen und der zweite Differenzdruck wird über die Messanschlüsse 21a und 21d gemessen. Der erste Differenzdruck ist unterschiedlich zum zweiten Differenzdruck, wobei der erste Differenzdruck insbesondere kleiner ist, als der zweite Differenzdruck.

Der Durchflusssensor 15 weist einen weiteren Messanschluss 30 auf, welcher vom Gehäusebauteil G abragt und am Kanalabschnitt 18d angeordnet ist. An diesem Messanschluss 30 ist ein Absolutdrucksensor 35 angeordnet, welcher den Absolutdruck im Fluid misst. Der Ausolutdrucksensor weist einen Messbereich von 0.5 bis 2 mbar auf.

Der Durchflusssensor 15 weist eine Haltevorrichtung 40 auf, welcher im am Kanalabschnitt 18d angeordnet ist. An dieser Haltevorrichtung 40 ist ein Temperatursensor 41 und ein Feuchtesensor 42 angeordnet, welcher die Temperatur sowie die Feuchte im Fluid messen. Diese Sensoren sind über eine Haltevorrichtung 40 im Messkanal 19 angeordnet und mit einer Auswerteeinheit, wie nachfolgend gezeigt, elektrisch verbunden.

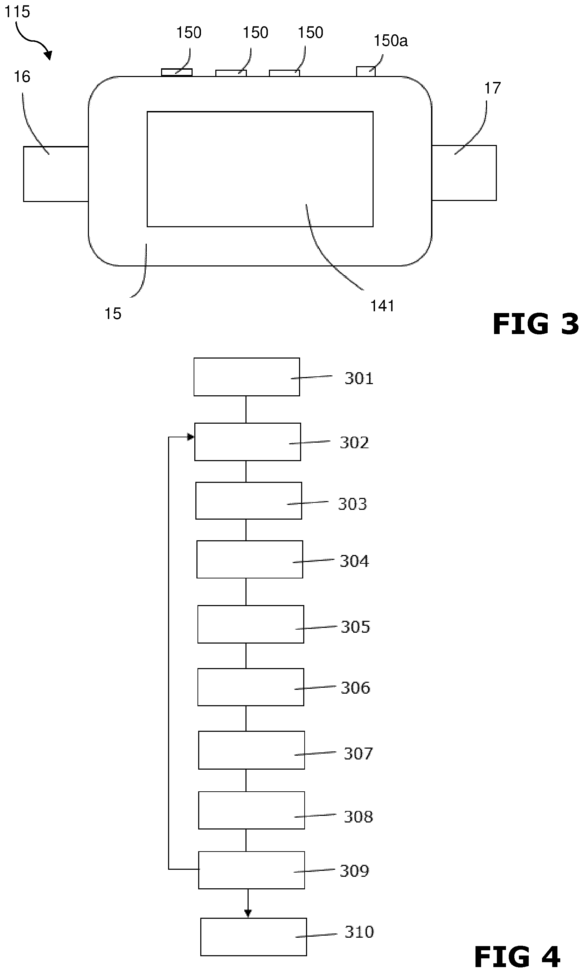

Die Fig. 2 und Fig. 3 zeigen ein Messsystem 115 zum Bestimmen einer Durchflussmenge mit dem Durchflusssensor 15 in einem Gehäuse 116, wie zuvor gemäss der Fig. 1 beschrieben. Die Differenzdrucksensoren 25 und 27, der Absolutdrucksensor 35, der Temperatursensor 41 sowie der Feuchtesensor 42 sind mit einer Auswerteeinheit 120 zum Austausch der jeweiligen Messdaten elektrisch verbunden. Die Auswerteeinheit 120 ist also mit den Differenzdrucksensoren 25 und 27 verbunden, um den ersten Differenzdruck im Messkanal 19 des Durchflusssensors 15 zu erfassen und den zweiten Differenzdruck im Messkanal 19 des Durchflusssensors 15 zu erfassen. Die Differenzdrucksensoren 25 und 27 sind somit zwischen den Messanschlüssen 21a-21d des Durchflusssensors 15 und der Auswerteeinheit 120 angeordnet. Die Auswerteeinheit 120 weist eine Speichereinheit 125 und eine Recheneinheit 130 auf. In der Speichereinheit 125 sind diverse mathematische Funktionen (Polynome, Lookup Tabellen) für die Temperatur, die Feuchte für unterschiedliche Fluidtypen sowie diverse Schrankenwerte für die Differenzdrücke gespeichert. Die Recheneinheit 130 ist zum Austausch von Daten mit der Speichereinheit 125 verbunden, wobei die erfassten Differenzdrücke und das nachfolgend beschriebene Verfahren in der Recheneinheit 135 der Auswerteeinheit 120 ausgeführt wird.

Es ist eine Anzeigeeinheit 140 vorhanden, um zumindest die bestimmte Durchflussmenge und/oder die gemessenen Parameter des Temperatursensors 41, des Feuchtesensors 42 und/oder des Absolutdrucksensors 35 anzuzeigen. Die Anzeigeeinheit kann ein einfaches Display und Eingabeknöpfe umfassen oder ein Touchdisplay 141 umfassen, um einzelne Programme, Funktionen oder Daten auszuwählen. Das Display ist ausgebildet, die Durchflussmenge grafisch darzustellen.

Das Messsystem zeigt mehrere Schnittstellen 150, zum Auslesen von erfassten Werten oder Daten der Differenzdrücke. Die erfassten Werte sind somit an ein externes Auswertegerät übertragbar. Die dargestellten Schnittstellen sind USB-Schnittstellen und RS232 Schnittstellen. Zumindest eine Schnittstelle 150a ist eine drahtlose Schnittstelle, wie bspw. Bluetooth ^{®}.

Fig. 4 zeigt ein Flussdiagramm, welches ein Verfahren zum Bestimmen der Durchflussmenge beinhaltet, wobei bezüglich der Vorrichtungsmerkmale auf das Messsystem 115 gemäss den Fig. 2 und Fig. 3 Bezug genommen wird.

Das Verfahren zum Bestimmen einer Durchflussmenge eines Fluids durch einen Durchflusssensor 15 mit einem Messkanal 19, umfasst zumindest die folgenden Schritte:
- Bereitstellen eines Fluids im Messkanal 19 des Durchflusssensors 15 (Schritt 301);
- Erfassen zumindest eines ersten Differenzdrucks im Messkanal 19, wobei der zumindest eine erste Differenzdruck in einem ersten Differenzdruckbereich 22 im Messkanal 19 vorliegt (Schritt 302);
- Erfassen zumindest eines zweiten Differenzdrucks im Messkanal 19, wobei der zumindest eine zweite Differenzdruck in einem zweiten Differenzdruckbereich 23 im Messkanal 19 vorliegt und der Differenzdruck im zweiten Differenzdruckbereich 23 den Differenzdruck im ersten Differenzdruckbereich 22 umfasst (Schritt 303);
- Übermitteln der erfassten Differenzdrücke an eine Auswerteeinheit 120;
- Erfassen der Temperatur und/oder der Feuchtigkeit mit dem Temperatursensor 41 (Schritt 304);
- Erfassen des Absolutdrucks mit dem Absolutdrucksensor (Schritt 305);
- Bestimmen der Dichte bzw. der Viskosität, welche eine Funktion des Fluidtyps, der Temperatur, der Feuchtigkeit und des Absolutdrucks ist (Schritt 306);
- Bestimmen einer ersten Durchflussmenge auf Basis der ersten Differenzdruckbestimmung im ersten Differenzdruckbereich 22, der Dichte und der Viskosität in der Recheneinheit der Auswerteeinheit 120 (Schritt 307);
- Bestimmen einer zweiten Durchflussmenge auf Basis der zweiten Differenzdruckbestimmung im zweiten Differenzdruckbereich 23, der Dichte und der Viskosität in der Recheneinheit der Auswerteeinheit 120 (Schritt 308);
- Bestimmten der Durchflussmenge im Messkanal 19 mithilfe der Auswerteeinheit 120 auf Basis der erfassten Differenzdrücke bzw. der daraus bestimmten ersten und zweiten Durchflussmenge (Schritt 309).

Beim Bereitstellen des Fluids wird ein Fluidtyp in der Auswerteeinheit ausgewählt (Schritt 301). Der Fluidtyp wird von einem Benutzer am Display ausgewählt und mithilfe der Eingabeknöpfe eingegeben. Der Fluidtyp ist in einer Lookup Tabelle in der Speichereinheit der Auswerteeinheit 120 hinterlegt.

Die Differenzdrücke im Messkanal 19 werden mithilfe der Widerstandselemente 20a-20c im Messkanal 19 erzeugt und werden von den Differenzdrucksensoren 25, 27 direkt gemessen. Der erste Differenzdruck ist unterschiedlich zum zweiten Differenzdruck, wobei der erste Differenzdruck insbesondere kleiner ist, als der zweite Differenzdruck. Der zweite Differenzdruckbereich 23 schliesst den ersten Differenzdruckbereich 22 im Messkanal 19 ein, sodass die innere Messung des ersten Differenzdrucks durch die äussere Messung des zweiten Differenzdrucks vor externen Turbulenzen geschützt ist, welche insbesondere bei hohen Durchflussmengen entstehen.

Im ersten Differenzdruckbereich 22 im Messkanal 19 werden erste Differenzdrücke im Differenzdruckbereich von -0.5kPa bis 0.5kPa erfasst. Im zweiten Differenzdruckbereich 23 im Messkanal 19 werden zweite Differenzdrücke im Differenzdruckbereich von - 1.5kPa bis 0.5kPa erfasst.

Vor dem Schritt 302 kann in der Recheneinheit 130 ein erster Schrankenwert aus der Speichereinheit 125 abgerufen werden, der als Festlegungskriterium für das Erfassen des zweiten Differenzdrucks im zweiten Differenzdruckbereich 23 dient. Wird der zumindest erste Schrankenwert für den ersten Differenzdruck erreicht, so kann automatisch festgelegt werden, ob bzw. wie der zweite Differenzdruck gemessen wird. Der erste Schrankenwert des ersten Differenzdrucks wird in der Recheneinheit mit dem aktuell erfassten ersten Differenzdruck verglichen.

Die Schritte 302 bis 309 können mehrmals durchgeführt werden, bevor eine Durchflussmenge an der Anzeigeeinheit 140 angezeigt wird (Schritt 310).

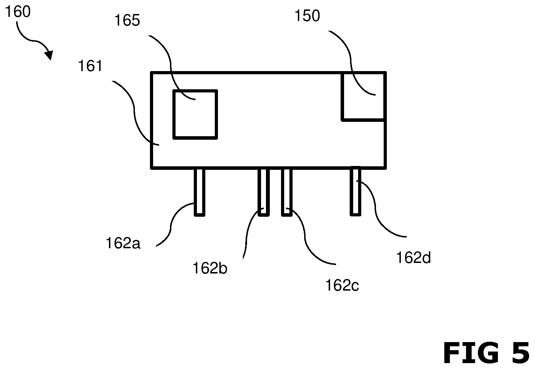

Fig. 5 zeigt einen Differenzdrucksensor 160 für einen Durchflusssensor 15 gemäss Fig. 1, der vier Druckmessanschlüsse 162a-d zum Erfassen von zwei unterschiedlichen Differenzdrücken in einem Messkanal 19 umfasst. der Differenzdrucksensor 160 benötigt nur eine Stromversorgung 165, nur ein Gehäuse 161 und ist somit einfach und kostengünstig aufgebaut. Das dafür notwendige Ausleseprotokoll kann einfach gehalten werden und es ist nur eine Schnittstelle 150, beispielsweise ein Datenbus notwendig, sodass die Installation und die Wartung des Differenzdrucksensor vereinfacht ist.

Der erste Messbereich des Differenzdrucksensors 160 ist im Bereich von -0.5kPa bis 0.5kPa. Der zweite Messbereich des Differenzdrucksensors 160 ist im Bereich von - 0.125kPa bis 0.125kPa.

### Bezugszeichenliste

- 15: Durchflusssensor
- 16: erster Anschluss
- 17: Zweiter Anschluss
- 18a-18d: Kanalabschnitte
- 19: Messkanal
- 20a-20d: Widerstandselemente
- 21a-21d: Messanschluss
- 22: erster Differenzdruckbereich
- 23: zweiter Differenzdruckbereich
- 25: erster Differenzdrucksensor
- 26a-26b: Druckmessanschlüsse
- 27: zweiter Differenzdrucksensor
- 28a-28b: Druckmessanschlüsse
- 30: Messanschluss
- 35: Absolutdrucksensor
- 40: Haltevorrichtung
- 41: Temperatursensor
- 42: Feuchtesensor

- 115: Messsystem
- 116: Gehäuse
- 120: Auswerteeinheit
- 125: Speichereinheit
- 130: Recheneinheit
- 140: Anzeigeeinheit
- 141: Touchdisplay
- 150-150a: Schnittstellen
- 160: Differenzdrucksensor
- 161: Gehäuse
- 162a-162d: Druckmessanschlüsse
- 165: Stromversorgung
- 301-310: Verfahrensschritte
- G: Gehäusebauteil
- F: Fluid (Gas/Flüssigkeit)

## Patentansprüche

1. Verfahren zum Bestimmen einer Durchflussmenge eines Fluids durch einen Durchflusssensor (15) mit einem Messkanal (19), insbesondere einen Durchflusssensor für die Prüfung eines Beatmungsgerätes, wobei das Verfahren zumindest die folgenden Schritte umfasst:
a. Bereitstellen eines Fluids im Messkanal (19) des Durchflusssensors (15);
b. Erfassen zumindest eines ersten Differenzdrucks im Messkanal (19), wobei der zumindest eine erste Differenzdruck in einem ersten Differenzdruckbereich (22) im Messkanal (19) vorliegt;
c. Erfassen zumindest eines zweiten Differenzdrucks im Messkanal (19), wobei der zumindest eine zweite Differenzdruck in einem zweiten Differenzdruckbereich (23) im Messkanal (19) vorliegt und der Differenzdruck im zweiten Differenzdruckbereich (23) den Differenzdruck im ersten Differenzdruckbereich (22) umfasst;
d. Übermitteln der erfassten Differenzdrücke an eine Auswerteeinheit (120);
e. Bestimmten einer Durchflussmenge im Messkanal (19) mithilfe der Auswerteeinheit (120) auf Basis der erfassten Differenzdrücke, **dadurch gekennzeichnet, dass** drei Widerstandselemente (20a-20c) im Messkanal (19) vorhanden sind, und dass der erste Differenzdruck über das zweite Widerstandselement (20b) erfasst wird, oder über das zweite und dritte Widerstandselement (20b, 20c) erfasst wird.

2. Verfahren nach Anspruch 1, **dadurch gekennzeichnet, dass** das Erfassen des ersten Differenzdrucks und des zweiten Differenzdrucks gleichzeitig erfolgt.

3. Verfahren nach Anspruch 1 oder 2, **dadurch gekennzeichnet, dass** der erste Differenzdruckbereich (22) im Messkanal (19) zumindest ein Widerstandselement (20a-20c) umfasst, wobei Differenzdrücke im Differenzdruckbereich von -20kPa bis 20kPa, insbesondere -1.2kPa bis 1.2kPa, bevorzugt von -0.5kPa bis 0.5kPa vorhanden sind.

4. Verfahren nach einem der vorgenannten Ansprüche, **dadurch gekennzeichnet, dass** der zweite Differenzdruckbereich (23) im Messkanal (19) zumindest zwei Widerstandselemente (20b, 20c) umfasst, wobei Differenzdrücke im Differenzdruckbereich von -100kPa bis 100kPa, insbesondere -5kPa bis 5kPa, bevorzugt von -1.5kPa bis 1.5kPa vorhanden sind.

5. Verfahren nach einem der vorgenannten Ansprüche, **dadurch gekennzeichnet, dass** der zweite Differenzdruck über alle drei Widerstandselemente (20a-20c) erfasst wird.

6. Verfahren nach einem der vorgenannten Ansprüche, **dadurch gekennzeichnet, dass** eine Speichereinheit (125) vorhanden ist, in welcher zumindest ein erster Schrankenwert für den ersten Differenzdruck gespeichert wird und/oder zumindest ein erster Schrankenwert für den zweiten Differenzdruck gespeichert wird.

7. Verfahren nach einem der vorgenannten Ansprüche, wobei zumindest ein Differenzdrucksensor (25, 27) vorhanden ist, **dadurch gekennzeichnet, dass** Differenzdrucksensor (25) den ersten Differenzdruck und den zweiten Differenzdruck misst, oder **dass** bevorzugt ein zweiter Differenzdrucksensor vorhanden ist, wobei der zumindest eine Differenzdrucksensor den ersten Differenzdruck misst und der zweite Differenzdrucksensor den zweiten Differenzdruck misst, wobei der Messbereich für den ersten Differenzdruck grösser ist, als der Messbereich für den zweiten Differenzdruck.

8. Verfahren nach einem der vorgenannten Ansprüche, **dadurch gekennzeichnet, dass** zumindest eine Fluideigenschaft des Fluids im Messkanal (19) erfasst wird, und im Schritt e) beim Bestimmten der Durchflussmenge verwendet wird, wobei die Fluideigenschaft mithilfe von einem Benutzer erfasst wird und/oder mit einem Sensor gemessen wird und/oder in der Auswerteeinheit (120) berechnet wird und bevorzugt die Fluideigenschaft zumindest von einem Parameter aus der Gruppe des Absolutdrucks, der Temperatur, der Feuchte, des Fluidtypes, der Viskosität oder der Dichte umfasst wird.

9. Durchflusssensor zum Bestimmen einer Durchflussmenge eines Fluids in einem Messkanal (19), insbesondere mit einem Verfahren nach zumindest einem der Ansprüche 1 bis 8, **dadurch gekennzeichnet, dass** der Messkanal (19) zumindest vier Kanalabschnitte (18a-18d) umfasst, welche in Serie benachbart zueinander im Durchflusssensor (15) angeordnet sind und zwischen den zueinander benachbarten Kanalabschnitten (18a-18d) jeweils zumindest ein Widerstandselement (20a-20c) angeordnet ist wobei jeder der Kanalabschnitte (18a-18d) zumindest einen Messanschluss (21a-21d) zum Messen eines Fluiddrucks aufweist.

10. Durchflusssensor nach Anspruch 9, **dadurch gekennzeichnet, dass** zumindest ein Gehäusebauteile vorhanden ist, in welchem die vier Kanalabschnitte (18a-18d) ausgebildet sind, wobei bevorzugt im ersten Kanalabschnitt (18a) ein Sieb (24a) angeordnet ist.

11. Durchflusssensor nach Anspruch 9 oder 10, **dadurch gekennzeichnet, dass** die Widerstandselemente (20a-20c) austauschbar in Messkanal (19) angeordnet sind, und bevorzugt zumindest ein Widerstandselement (20b) unterschiedlich zu den anderen Widerstandselementen (20a, 20c) ausgebildet ist.

12. Durchflusssensor nach einem der Ansprüche 9 bis 11, **dadurch gekennzeichnet, dass** zumindest ein Differenzdrucksensor (25, 27) an zumindest zwei der Messanschlüsse (26a, 26b, 28a, 28b) angeordnet ist und bevorzugt zumindest ein Absolutdrucksensor (35) und/oder ein Temperatursensor (41) und/oder ein Feuchtigkeitssensor (42) im Messkanal (19) vorhanden ist.

13. Messsystem (115) zum Bestimmen einer Durchflussmenge mit einem Durchflusssensor (15) nach einem der Ansprüche 9 bis 12, und mit zumindest einem Differenzdrucksensor, **dadurch gekennzeichnet, dass** eine Auswerteeinheit (120) vorhanden ist, welche zumindest mit dem zumindest einen Differenzdrucksensor (25, 27) verbunden ist, um zumindest einen ersten Differenzdruck im Messkanal (19) des Durchflusssensors (15) zu erfassen und einen zweiten Differenzdruck im Messkanal (19) des Durchflusssensors (15) zu erfassen, wobei die Auswerteinheit (120) ausgebildet ist ein Verfahren nach einem der Ansprüche 1 bis 8 auszuführen, und bevorzugt eine Anzeigeeinheit (120) vorhanden ist, um zumindest die Durchflussmenge anzuzeigen, wobei insbesondere die Durchflussmenge grafisch darstellbar ist.

14. Messsystem nach Anspruch 13, **dadurch gekennzeichnet, dass** eine Speichereinheit (135) vorhanden ist, in welcher zumindest ein erster Schrankenwert gespeichert ist und/oder zumindest eine Schnittstelle zum Auslesen von erfassten Werten und/oder ausgewerteten Daten vorhanden ist.

15. Differenzdrucksensor (160) für einen Durchflusssensor (15) nach einem der Ansprüche 9 bis 12, mit vier Druckmessanschlüsse (162a-162d) zum Erfassen von zwei unterschiedlichen Differenzdrücken in einem Messkanal (19) nach ein Verfahren nach einem der Ansprüche 1 bis 8.

## Claims

1. A method for determining a flow rate of a fluid through a flow sensor (15) with a measurement channel (19), in particular a flow sensor for testing a respirator, wherein the method comprises at least the following steps:
a. providing a fluid in the measurement channel (19) of the flow sensor (15);
b. capturing at least one first differential pressure in the measurement channel (19), wherein the at least one first differential pressure is present in a first differential-pressure area (22) in the measurement channel (19);
c. capturing at least one second differential pressure in the measurement channel (19), wherein the at least one second differential pressure is present in a second differential-pressure area (23) in the measurement channel (19) and the differential pressure in the second differential-pressure area (23) comprises the differential pressure in the first differential-pressure area (22);
d. transmitting the captured differential pressures to an evaluation unit (120);
e. determining a flow rate in the measurement channel (19) by means of the evaluation unit (120) based on the captured differential pressures, **characterized in that** three resistance elements (20a-20c) are provided in the measurement channel (19), and **in that** the first differential pressure is captured via the second resistance element (20b), or is captured via the second and third resistance elements (20b, 20c).

2. The method according to claim 1, **characterized in that** the first differential pressure and the second differential pressure are captured simultaneously.

3. The method according to claim 1 or 2, **characterized in that** the first differential-pressure area (22) in the measurement channel (19) comprises at least one resistance element (20a-20c), wherein there are differential pressures in a differential-pressure range from -20kPa to 20kPa, in particular -1.2kPa to 1.2kPa, preferably from -0.5kPa to 0.5kPa.

4. The method according to one of the preceding claims, **characterized in that** the second differential-pressure area (23) in the measurement channel (19) comprises at least two resistance elements (20b, 20c), wherein there are differential pressures in a differential-pressure range from -100kPa to 100kPa, in particular -5kPa to 5kPa, preferably from -1.5kPa to 1.5kPa.

5. The method according to one of the preceding claims, **characterized in that** the second differential pressure is captured via all three resistance elements (20a-20c).

6. The method according to one of the preceding claims, **characterized in that** a memory unit (125) is provided, in which at least a first threshold value for the first differential pressure is stored and/or at least a first threshold value for the second differential pressure is stored.

7. The method according to one of the preceding claims, wherein at least one differential-pressure sensor (25, 27) is provided, **characterized in that** the differential-pressure sensor (25) measures the first differential pressure and the second differential pressure, or **in that** preferably a second differential-pressure sensor is provided, wherein the at least one differential-pressure sensor measures the first differential pressure and the second differential-pressure sensor measures the second differential pressure, wherein the measurement range for the first differential pressure is greater than the measurement range for the second differential pressure.

8. The method according to one of the preceding claims, **characterized in that** at least one fluid property of the fluid in the measurement channel (19) is captured and used in step e) during the determination of the flow rate, wherein the fluid property is captured by means of a user and/or is measured with a sensor and/or is calculated in the evaluation unit (120) and preferably the fluid property is comprised by at least one parameter from the group consisting of absolute pressure, temperature, humidity, fluid type, viscosity or density.

9. A flow sensor for determining a flow rate of a fluid in a measurement channel (19), in particular with a method according to at least one of claims 1 to 8, **characterized in that** the measurement channel (19) comprises at least four channel sections (18a-18d), which are arranged in the flow sensor (15) adjacent to one another in series and at least one resistance element (20a-20c) is respectively arranged between the adjacent channel sections (18a-18d), wherein each of the channel sections (18a-18d) has at least one measurement connection (21a-21d) for measuring a fluid pressure.

10. The flow sensor according to claim 9, **characterized in that** at least one housing part is provided in which the four channel sections (18a-18d) are formed, wherein a sieve (24a) is preferably arranged in the first channel section (18a).

11. The flow sensor according to claim 9 or 10, **characterized in that** the resistance elements (20a-20c) are arranged in a replaceable manner in the measurement channel (19), and preferably at least one resistance element (20b) is designed differently from the other resistance elements (20a, 20c).

12. The flow sensor according to one of claims 9 to 11, **characterized in that** at least one differential-pressure sensor (25, 27) is arranged on at least two of the measurement connections (26a, 26b, 28a, 28b) and preferably at least one absolute-pressure sensor (35) and/or one temperature sensor (41) and/or one humidity sensor (42) is provided in the measurement channel (19).

13. A measuring system (115) for determining a flow rate with a flow sensor, in particular a flow sensor (15) according to one of claims 9 to 12, and with at least one differential-pressure sensor, **characterized in that** an evaluation unit (120) is provided, which is connected at least to the at least one differential-pressure sensor (25, 27) in order to capture at least a first differential pressure in the measurement channel (19) of the flow sensor (15) and a second differential pressure in the measurement channel (19) of the flow sensor (15), wherein the evaluation unit (120) is designed to carry out a method according to one of claims 1 to 8, and preferably a display unit (120) is provided in order to display at least the flow rate, wherein in particular the flow rate can be represented graphically.

14. The measurement system according to claim 13, **characterized in that** a memory unit (135) is provided in which at least a first threshold value is stored and/or at least one interface for reading out captured values and/or evaluated data is provided.

15. A differential-pressure sensor (160) for a flow sensor (15) according to one of claims 9 to 12, with four pressure-measurement connections (162a-162d) for capturing two different differential pressures in a measurement channel (19) according to a method according to one of claims 1 to 8.

## Revendications

1. Procédé destiné à déterminer un débit d'un fluide par un capteur de débit (15) avec un canal de mesure (19), en particulier un capteur de débit pour le contrôle d'un appareil respiratoire, sachant que le procédé comprend au moins les étapes suivantes :
a. fourniture d'un fluide dans le canal de mesure (19) du capteur de débit (15),
b. saisie d'au moins une première pression différentielle dans le canal de mesure (19), sachant qu'au moins une première pression différentielle existe dans une première zone de pression différentielle (22) dans le canal de mesure (19),
c. saisie d'au moins une deuxième pression différentielle dans le canal de mesure (19), sachant qu'au moins une deuxième pression différentielle existe dans une deuxième zone de pression différentielle (23) dans le canal de mesure (19) et la pression différentielle dans la deuxième zone de pression différentielle (23) comprend la pression différentielle dans la première zone de pression différentielle (22),
d. transmission des pressions différentielles saisies à une unité d'évaluation (120),
e. détermination d'un débit dans le canal de mesure (19) à l'aide de l'unité d'évaluation (120) sur la base des pressions différentielles saisies, **caractérisé en ce que** trois éléments de résistance (20a - 20c) sont présents dans le canal de mesure (19) et **en ce que** la première pression différentielle est saisie par le biais du deuxième élément de résistance (20b) ou est saisie par le biais du deuxième ou troisième élément de résistance (20b 20c).

2. Procédé selon la revendication 1, **caractérisé en ce que** la saisie de la première pression différentielle et de la deuxième pression différentielle a lieu simultanément.

3. Procédé selon la revendication 1 ou 2, **caractérisé en ce que** la première zone de pression différentielle (22) dans le canal de mesure (19) comprend au moins un élément de résistance (20a-20c), sachant que les pressions différentielles sont présentes dans la zone de pression différentielle de -20kPa à 20 kPa, en particulier de -1,2 kPa à 1,2 kPa, de préférence de - 0,5 kPa à 0,5 kPa.

4. Procédé selon l'une quelconque des revendications précédentes, **caractérisé en ce que** la deuxième zone de pression différentielle (23) dans le canal de mesure (19) comprend au moins deux éléments de résistance (20b, 20c), sachant que les pressions différentielles sont présentes dans la zone de pression différentielle de - 100kPa à 100 kPa, en particulier de -5 kPa à 5 kPa, de préférence de -1,5 kPa à 1,5 kPa.

5. Procédé selon l'une quelconque des revendications précédentes, **caractérisé en ce que** la deuxième pression différentielle est saisie par le biais de tous les trois éléments de résistance (20a - 20c).

6. Procédé selon l'une quelconque des revendications précédentes, **caractérisé en ce qu'**une unité de mémorisation (125) est présente dans laquelle au moins une première valeur limite est mémorisée pour la première pression différentielle et/ou au moins une première valeur limite est mémorisée pour la deuxième pression différentielle.

7. Procédé selon l'une quelconque des revendications précédentes, sachant qu'au moins un capteur de pression différentielle (25, 27) est présent, **caractérisé en ce que** le capteur de pression différentielle (25) mesure la première pression différentielle et la deuxième pression différentielle, ou **en ce que** de préférence un deuxième capteur de pression différentielle est présent, sachant qu'au moins un capteur de pression différentiel mesure la première pression différentielle et le deuxième capteur de pression différentielle mesure la deuxième pression différentielle, sachant que la zone de mesure pour la première pression différentielle est plus grande que la zone de mesure pour la deuxième pression différentielle.

8. Procédé selon l'une quelconque des revendications précédentes, caractérisé en qu'au moins une propriété de fluidité du fluide est saisie dans le canal de mesure (19) et est utilisée lors de la détermination du débit dans l'étape e), sachant que la propriété de fluidité est saisie à l'aide d'un utilisateur et/ou est mesurée avec un capteur et/ou est calculée dans l'unité d'évaluation (120) et de préférence la propriété de fluidité est saisie au moins par un paramètre faisant partie du groupe de pression absolue, de température, de l'humidité, du type de fluide, de la viscosité ou de la densité.

9. Capteur de débit destiné à la détermination d'un débit d'un fluide dans un canal de mesure (19), en particulier avec un procédé selon au moins l'une quelconque des revendications 1 à 8, **caractérisé en ce que** le canal de mesure (19) comprend au moins quatre sections de canal (18a-18d), lesquelles sont disposées en série voisines l'une de l'autre dans le capteur de débit (15) et au moins un élément de résistance (20a-20c) est à chaque fois disposé entre les sections de canal (18a - 18d) voisines l'une de l'autre, sachant que chacune des sections de canal (18a-18d) comporte au moins un raccord de mesure (21a - 21d) pour mesurer une pression de fluide.

10. Capteur de débit selon la revendication 9, **caractérisé en ce qu'**au moins un composant de boîtier est présent, dans lequel sont constitués les quatre sections de canal (18a - 18d), sachant de préférence que dans la première section de canal (18a) est disposé un filtre (24a).

11. Capteur de débit selon la revendication 9 ou 10, **caractérisé en ce que** les éléments de résistance (20a-20c) sont disposés de façon échangeable dans le canal de mesure (19) et au moins un élément de résistance (20b) est de préférence constitué différemment des autres éléments de résistance (20a, 20c).

12. Capteur de débit selon l'une quelconque des revendications 9 à 11, **caractérisé en ce qu'**au moins un capteur de pression différentielle (25, 27) est disposé sur au moins deux des raccords de mesure (26a, 26b, 28a, 28b) et au moins un capteur de pression absolue (35) et/ou un capteur de température (41) et/ou un capteur d'humidité (42) est présent de préférence dans le canal de mesure (19).

13. Système de mesure (115) destiné à déterminer un débit avec un capteur de débit (15) selon l'une quelconque des revendications 9 à 12 et avec au moins un capteur de pression différentielle, **caractérisé en ce qu'**une unité d'évaluation (120) est présente, laquelle est reliée au moins à au moins un capteur de pression différentielle (25, 27) pour saisir au moins une première pression différentielle dans le canal de mesure (19) du capteur de débit (15) et saisir une deuxième pression différentielle dans le canal de mesure (19) du capteur de débit (15), sachant que l'unité d'évaluation (120) est constituée pour exécuter un procédé selon l'une quelconque des revendications 1 à 8 et de préférence une unité d'affichage (120) est présente pour afficher au moins le débit, sachant en particulier que le débit peut être représenté sous forme graphique.

14. Système de mesure selon la revendication 13, **caractérisé en ce qu'**une unité de mémorisation (135) est présente dans laquelle est mémorisée au moins une première valeur limite et/ou au moins une interface de lecture des valeurs saisies et/ou des données évaluées est présente.

15. Capteur de pression différentielle (160) pour un capteur de débit (15) selon l'une quelconque des revendications 9 à 12, avec quatre raccords de mesure de pression (162a-162d) pour la saisie de deux pressions différentielles différentes dans un canal de mesure (19) selon un procédé selon l'une quelconque des revendications 1 à 8.
